# EUROPEAN PATENT SPECIFICATION

(11) **EP 2 465 396 B1**
(45) Date of publication and mention of the grant of the patent: **24.12.2014**
(21) Application number: 11380084.1
(22) Date of filing: 24.10.2011
(51) Int. Cl.: A47J 43/044, A47J 43/07

(54) **Hand-held mixer with a detachable working head**
Handmixer mit abnehmbarem Arbeitskopf
Mélangeur portable doté d'une tête de travail amovible

(30) Priority: 15.12.2010 ES 201001577 P
(43) Date of publication of application: 20.06.2012
(73) Proprietor: Electrodomesticos Taurus S.L., 25790 Oliana (Lleida) (ES)
(72) Inventor: Montraveta Montraveta, Fidel, 25790 Oliana (Lleida) (ES); Alet Vidal, Josep, 25790 Oliana (Lleida) (ES); Trench Roca, Lluís, 25790 Oliana (Lleida) (ES)
(74) Representative: Torner Lasalle, Elisabet

(56) References cited:
- EP-A1- 1 358 970
- EP-A1- 1 772 087
- EP-A1- 2 394 548
- CN-Y- 2 509 977
- CN-Y- 201 356 471

## Description

### Field of the Art

The present invention relates to a hand-held mixer with a detachable working head, generally useful in the field of kitchen utensils and more particularly in the field of home kitchen utensils.

### Background of the Invention

Hand-held mixers with detachable a head, essentially comprising a motor assembly with a shell in which there is housed a motor operatively connected for rotating a drive shaft, and a working head comprising a shell and a transmission shaft operatively connected for driving a mechanism or a tool are known in the state of the art. The working head can be coupled in a removable manner to the motor assembly such that the respective shells are mutually coupled by shell coupling means that keep the two shells joined together at the same time as the drive shaft and the transmission shaft are coupled to one another by shaft coupling means carrying out a rotating movement and torque transmission from the drive shaft to the transmission shaft.

Patent US-A-6974244 discloses a hand-held mixer of the type referred to in which the shell coupling means for coupling the shell of the head to the shell of the motor assembly in a removable manner comprise a bayonet-type connection and the shaft coupling means for coupling the transmission shaft to the drive shaft comprise an externally grooved member which is inserted in an internally grooved socket.

Nevertheless, the bayonet type connection has the drawback of requiring a combined movement in the axial and circumferential directions where the circumferential coupling movement can only be initiated after the head shell and the motor assembly shell have been arranged in a predetermined relative angular position, which often has to be found blindly, and axially moved one towards another a predetermined distance. Another drawback is that in order to carry out the circumferential coupling movement, a specific torque has to be applied manually by feel and it is easy for the coupling to be loose if the torque applied is not enough, or too tight if the torque applied is excessive, which can difficult the subsequent decoupling.

Document EP 2394548 A1 discloses a mixer comprising a motor shell in which there is housed a motor having a drive shaft, and a detachable head shell in which there is installed a transmission shaft. The motor shell and the head shell are detachably coupled to one another by respective form fitting elements. The drive shaft and the transmission shaft have respective rotating coupling members which are detachably coupled to one another when the head shell is coupled to the motor shell. The transmission shaft is made of a ferromagnetic material and a magnetic element fixed to the drive shaft is provided to attract the transmission shaft towards the drive shaft when the working head is coupled to the motor assembly.

A drawback with the mixer of document EP 2394548 A1 is that to detach the head shell from the motor shell it is necessary to manually pull them from one another in axial opposite directions with a force greater than the attraction force exerted by the magnetic element until the magnetic element becomes separated from the ferromagnetic transmission shaft, at which moment the magnetic attraction force ceases and the pulling force manually applied to the head shell and motor shell makes the head shell and the motor shell to be suddenly moved away from one another with a movement difficult to control.

Document CN 201356471 Y describes a milk frother pot comprising a pot and a stirrer driven by an electric motor to stir milk within the pot. The electric motor has a drive shaft and the stirrer has a stirring shaft detachably coupled thereto by means of respective coupling members provided with respective magnetic elements which are centred with respect to the shafts and which rotate together with the shafts. This detachable coupling has a similar drawback as the one described above in relation to document EP 2394548 A1.

Document EP 1772087 A1 discloses a food mixer having a rotating tool driven by an electric motor housed in a shell. The shell has a dome-shaped protective cover and the rotating tool is mounted on a dome-shaped holder that detachably locks inside the protective cover by means of anchoring elements in the form of elastic lugs protruding from the holder that engage with matching openings in the protective cover. The tool and the holder are detached from the protective cover by pressing inwards on the projecting bosses of the lugs. A tool shaft of the rotating tool detachably couples to a motor drive shaft when the holder is locked to the protective cover. No magnetic elements are provided.

### Disclosure of the Invention

The present invention contributes to solving the above and other drawbacks by providing a hand-held mixer with detachable working head, which includes a motor assembly comprising a motor shell in which a motor operatively connected for rotating a drive shaft is housed and a working head comprising a head shell in which a transmission shaft operatively connected for driving a mechanism or a tool is installed, shell coupling means for coupling said head shell and motor shell to one another in a removable manner further being arranged, and first and second shaft coupling members fixed to said drive shaft and said transmission shaft, respectively, and arranged for coaxially coupling said drive shaft to said transmission shaft in a removable manner when the working head and the motor assembly are mutually coupled.

The mentioned shell coupling means comprise first and second magnetic coupling elements fixed to the motor shell and to the head shell, respectively, in combination with positioning means which allow placing the motor shell (11) and the head shell (21) in a relative angular and axial coupling position in which said first and second magnetic coupling elements (15, 25) are aligned and close enough to one another for exerting a magnetic attraction force capable of keeping the motor shell (11) and the head shell (21) mutually coupled.

In a preferred embodiment the aforementioned positioning means comprise a recess (16) formed in the motor shell (11), and a protrussion (26) formed in the head shell (21), or vice versa, said recess (16) and said protrussion (26) being configured and arranged such that the protrussion (26) fits in the recess (16) when the motor shell (11) and the head shell (21) are in said relative angular and axial coupling position

The aforementioned protrussion (26) formed in the head shell (21) or in the motor shell (11) contacts with a contact surface (17) of the motor shell (11) or of the head shell (21), respectively, when said motor shell (11) and the head shell (21) are in a range of relative angular and axial semi-coupling positions, in which the first and second magnetic coupling elements (15, 25) are misaligned and axially separated.

Preferably, the mixer comprises a number of recesses distributed at regular angular intervals around the drive shaft in the motor shell and an equal or lower number of corresponding protrussions distributed at regular angular intervals around the transmission shaft in the head shell, or vice versa.

In one embodiment, each recess comprises a recess ramp at a circumferential end thereof and each protrussion comprises a protrussion ramp at a corresponding circumferential end thereof, whereby said recess and protrussion ramps slide with respect to one another for separating the motor shell and the head shell when both are rotated in respective opposite decoupling directions from the mentioned relative angular and axial coupling position. Preferably, each recess comprises a recess step at another circumferential end thereof opposite said recess ramp and each protrussion comprises a protrussion step at another circumferential end thereof opposite said protrussion ramp. Thus, the mentioned recess and protrussion steps abut one another for preventing the rotations of the motor shell and the head shell in respective opposite directions contrary to said opposite decoupling directions from the relative angular and axial coupling position..

The positions of the circumferential opposite ends of the recesses and protrussions in which the recess and protrussion ramps and the recess and protrussion steps are found are selected according to the rotation direction of the drive shaft to prevent the latter from rotating the working head with respect to the motor assembly when the recesses and the protrussions are mutually coupled.

In one embodiment, the first magnetic coupling elements are arranged in the recesses and have a surface flush with a bottom surface of the corresponding recess, and the second magnetic coupling elements are arranged in the protrussions and have a surface flush with a top surface of the corresponding protrussion, although this arrangement is not essential and the first and second magnetic coupling elements can be arranged in other positions of the motor shell and of the head shell, respectively.

### Brief Description of the Drawings

The foregoing and other features and advantages will be better understood from the following detailed description of exemplary embodiments with reference to the attached drawings, in which:
Fig. 1 is an elevational side view of a hand-held mixer with detachable working head according to an embodiment of the present invention;
Fig. 2 is a perspective partial view showing interface areas of a motor assembly and a working head of the mixer of Fig. 1 in a decoupled position;
Fig. 3 is a partial cross section view of the mixer of Fig. 1 with the motor assembly and the working head in the decoupled position;
Fig. 4 is a partial cross section view of the mixer of Fig. 1 with the motor assembly and the working head in the coupled position;
Figs. 5A-5D are partial cross section schematic views illustrating the operation of coupling means according to the embodiment shown in Figs. 1 to 4; and
Figs. 6A-6D are partial cross section schematic views illustrating the operation of coupling means according to another embodiment of the present invention.

### Detailed Description of Exemplary Embodiments

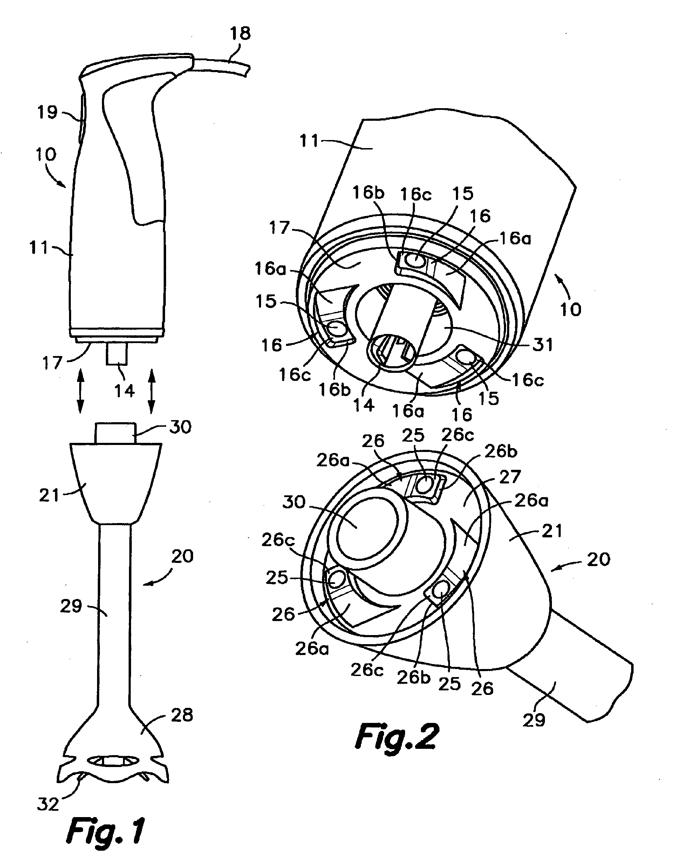

Referring first to Fig. 1, there is shown a hand-held mixer with detachable working head according to an embodiment of the present invention, which comprises a motor assembly 10 and a working head 20. The motor assembly includes a motor shell 11 which housed therein driving means supplied through a connection cable 18. The motor shell 11 is configured for being held and handled with one hand and has a button 19 which can be depressed for activating the driving means. The working head 20 comprises a head shell 21 in which there are arranged transmission means operatively connected for driving a tool 32 such as a rotating blade partially covered by a hood 28 at the distal end of a rod 29 fixed to the head shell 21.

The motor assembly 10 and the working head 20 are detachable and comprise respective shell coupling means for connecting the motor shell 11 and the head shell 21 in a removable manner and driving coupling means for connecting the driving means with the transmission means at the same time.

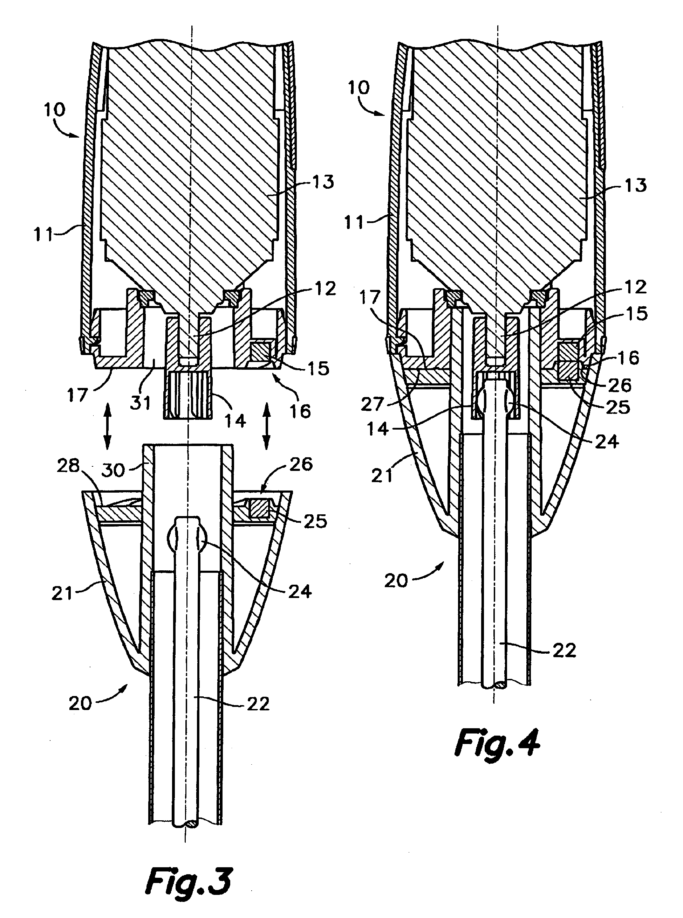

As shown in Figs. 3 and 4, the driving means comprise an electric motor 13 housed inside the motor shell 11 of the motor assembly 10. This motor 13 is operatively connected for rotating a drive shaft 12 to which there is fixed a shaft coupling member 14 located in an accessible position in an interface area better shown in Fig. 2. A transmission shaft 22 is installed in the head shell 21 of the working head 20 such that it can rotate freely. The transmission shaft 22 is operatively connected for driving the tool 32 and is provided with a coupling member 24 located in an accessible position in an interface area better shown in Fig. 2.

Fig. 2 shows the interface areas of the motor shell 11 and of the head shell 21, where the respective shell coupling means are found. These shell coupling means comprise a number of recesses 16 formed in a contact surface 17 of the motor shell 11 and distributed at regular angular intervals around a guide housing 31 through which the shaft coupling member 14 is arranged, and a number of corresponding protrussions 26 formed in the head shell 21 and distributed at regular angular intervals around a surrounding wall 30 surrounding the transmission shaft 22. When the motor assembly 10 and the working head 20 are in a relative angular and axial coupling position (Fig. 4), the aforementioned protrussions 26 are inserted in the recesses 16 at the same time that the shaft coupling member 14 of the drive shaft 12 is coupled with the shaft coupling member 24 of the transmission shaft 22.

The shell coupling means further comprise a first magnetic coupling element 15 arranged in each recess 16 and a second magnetic coupling element 25 arranged in each protrussion 26. The first magnetic coupling element 15 has an exposed surface flush with a bottom surface 16c of the corresponding recess 16, and the second magnetic coupling element 25 has an exposed surface flush with a top surface 26c of the corresponding protrussion 26. Thus, when the motor shell 11 and the head shell 21 are in said relative angular and axial coupling position, the first and second magnetic coupling elements 15, 25 are aligned and close enough to one another for exerting a magnetic attraction force capable of keeping the motor and head shells 11, 21 mutually coupled.

Preferably, each recess 16 comprises a recess ramp 16a at a circumferential end of said bottom surface 16c and a recess step 16b at another circumferential end opposite said recess ramp 16a. In a similar manner, each protrussion 26 comprises a protrussion ramp 26a at a circumferential end of said top surface 26c and a protrussion step 26b at another circumferential end opposite said protrussion ramp 26a. The profiles of the recesses 16 and of the protrussions 26 in the circumferential direction are complementary.

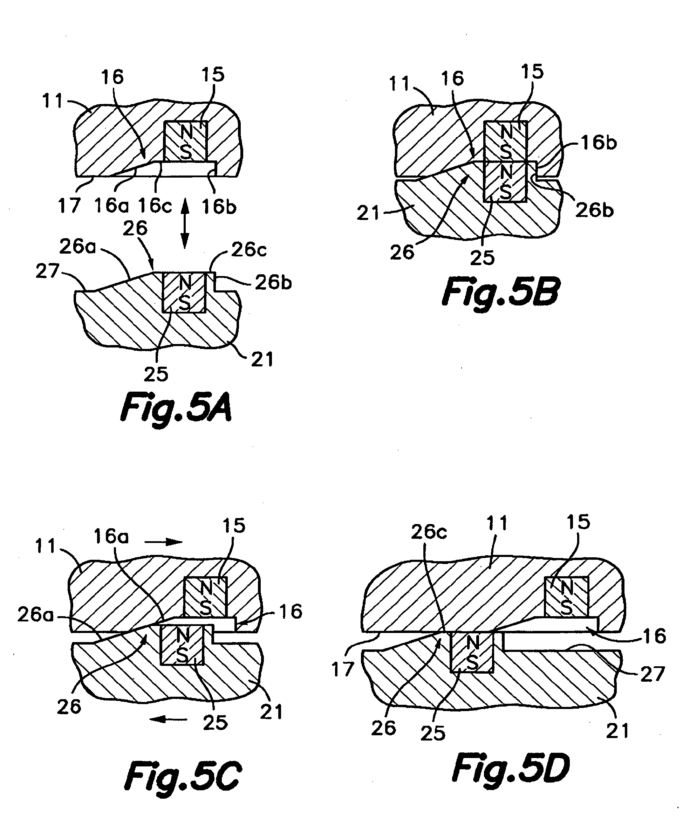

Referring to Figs. 5A-5D the operation of the shell coupling means is now described according to the embodiment of the hand-held mixer shown in Figs. 1 to 4.

Fig. 5A shows the motor shell 11 and the head shell 21 separated and with the corresponding recesses 16 and protrussions 26 approximately facing each other. To carry out the coupling, the motor shell 11 and the head shell 21 are placed in contact such that the mentioned surrounding wall 30 of the head shell 21 fits in said guide housing 31 of the motor shell 11 (Fig. 4), whereby both shells 11, 21 are mutually guided for axial and rotational movements. Although it is probable that the recesses 16 and protrussions 26 will not fitted immediately, from this position, by rotating the motor shell 11 and the head shell 21 in opposite directions and lightly pressing them against each other the mutual fitting of the recesses 16 and protrussions 26 is easily achieved.

Fig. 5B shows the motor shell 11 and the head shell 21 in the relative angular and axial coupling position, in which the recesses 16 and protrussions 26 are fitted and the first and second magnetic coupling elements 15, 25 are aligned and in contact. In this embodiment, the first and second magnetic coupling elements 15, 25 are respective permanent magnets and the arrangement of their poles N, S is obviously adequate for causing a mutual attraction maintaining the motor shell 11 and the head shell 21 coupled to one another. Furthermore, in this position the recess and protrussion steps 16b, 26b are facing each other and prevent the motor and head shells 11, 21 from rotating in opposite directions contrary to said opposite decoupling directions.

Nevertheless, as illustrated in Fig. 5C, when the motor shell 11 and the head shell 21 are to be decoupled it is enough to force the relative rotation of the motor and head shells 11, 21 in opposite decoupling directions to cause the recess and protrussion ramps 16a, 26a to slide with respect to one another, whereby the motor shell 11 and the head shell 21 are separated and the first and second magnetic coupling elements 15, 25 cease to be aligned and move away from each other both in the axial and circumferential direction. The mentioned opposite decoupling directions and the opposite directions contrary thereto are selected according to the rotation direction of the drive shaft 12 to prevent the latter from rotating the working head 20 with respect to the motor assembly 10 when the motor shell 11 and the head shell 21 are in the relative angular and axial coupling position.

Fig. 5D shows the motor shell 11 and the head shell 21 arranged in a relative semi-coupling angular position, in which the top surface 26c of the protrussion 26 of the head shell 21 contacts with the contact surface 17 of the motor shell 11. In this position, the first and second magnetic coupling elements 15, 25 are misaligned and are so separated from each other that they do not exert any noticeable mutual attraction. From this position, the motor shell 11 and the head shell 21 can be easily separated by means of a separating movement in the axial direction or coupled again by rotating the motor shell 11 and the head shell 21 in opposite directions and lightly pressing them against each other as described above in relation to Fig. 5A.

It is understood that the number of recesses 16 in the motor shell 11 must be equal or greater than the number of protrussions 26 in the head shell 21, since a number of recesses 16 lower than the number of protrussions 26 would prevent the coupling. It is seen that the motor shell 11 and the head shell 21 only have a number of relative angular and axial coupling positions equal to the number of recesses 16 in the motor shell 11, whereas they have a rather wide range of relative angular and axial semi-coupling positions between the relative angular and axial coupling positions.

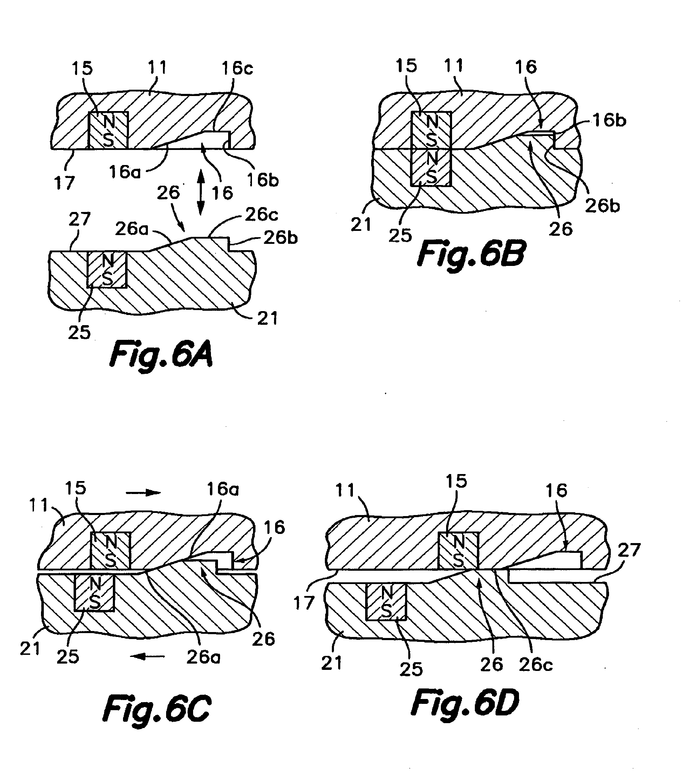

Figs. 6A-6D show an alternative embodiment which is similar in every way to the embodiment described in relation to Figs. 5A-5D except in that the first and second magnetic coupling elements 15, 25 are not arranged in the bottom surface 16c of the recess 16 and in the top surface 26c of the protrussion 26, respectively, but in the contact surface 17 of the motor shell 11 and in an interface surface 27 of the head shell 21. The first magnetic coupling element 15 has a surface flush with the contact surface 17 and the second magnetic coupling element 25 has a surface flush with the interface surface 27.

In Fig. 6A the motor shell 11 and the head shell 21 are separated. In Fig. 6B the motor shell 11 and the head shell 21 are in the relative angular and axial coupling position in which the recess 16 and the protrussion 26 are mutually coupled and the first and second magnetic coupling elements 15, 25 are aligned and in contact or close enough to attract each other and thus keeps the motor shell 11 and the head shell 21 coupled to each other.

In Fig. 6C the motor shell 11 and the head shell 21 are rotated in opposite directions such that the recess and protrussion ramps 16a, 26a slide with respect to one another for separating the motor and head shells 11, 21, whereby the first and second magnetic coupling elements 15, 25 are misaligned and separated. In Fig. 6D the motor shell 11 and the head shell 21 are in a relative angular semi-coupling position, with the top surface 26c of the protrussion 26 of the head shell 21 in contact with the contact surface 17 of the motor shell 11, and with the first and second magnetic coupling elements 15, 25 misaligned and separated from each other.

It is understood that both the embodiment shown in Figs. 1-5D and the embodiment shown in Figs. 6A-6D allow a reverse construction, in which the recesses are formed in the head shell and the protrussions in the motor shell. Also, it is not essential that the first and second magnetic coupling elements have an exposed surface, since they can be hidden under a layer of a material and a thickness which does not significantly prevent the magnetic flow. An alternative embodiment is possible in which one of the first and second magnetic coupling elements are permanent magnets and the other are elements of a ferromagnetic material capable of being attracted by the permanent magnets.

It is also understood that the transmission shaft of the working head can be operatively connected for driving a mechanism instead of a tool. For example, the working head can be a reducing accessory of a known type which is used, for example, for driving a kitchen processor by means of the motor of the motor assembly.

A person skilled in the art would be able to introduce modifications, variations and combinations from the embodiments shown and described without departing from the scope of the present invention, particularly the positioning means could be obtained from reference markings in the shells, or self centering auxiliary configurations could be used, as defined in the attached claims.

## Claims

1. A hand-held mixer with a detachable working head, comprising:
a motor assembly (10) comprising a motor shell (11) wherein a motor (13) operatively connected for rotating a drive shaft (12) is housed;
a working head (20) comprising a head shell (21) wherein a transmission shaft (22) operatively connected for driving a mechanism or a tool is installed;
shell coupling means for coupling said head shell (21) to said motor shell (11) in a removable manner; and
first and second shaft coupling members (14, 24) fixed to said drive shaft (12) and to said transmission shaft (22) respectively for coaxially coupling said drive shaft (12) to said transmission shaft (22) in a removable manner when the motor shell (11) and the head shell (21) are mutually coupled,
**characterised in that** said shell coupling means comprise:
first and second magnetic coupling elements (15, 25) stationarily fixed to the motor shell (11) and to the head shell (21), respectively, in off-centred positions with respect to the drive shaft (12) and to the transmission shaft (22); and
positioning means which allow placing the motor shell (11) and the head shell (21) in a relative angular and axial coupling position wherein said first and second magnetic coupling elements (15, 25) are aligned and close enough to one another for exerting a magnetic attraction force capable of retaining the motor shell (11) and the head shell (21) mutually coupled.

2. The hand-held mixer according to claim 1, **characterised in that** said positioning means comprise a recess (16) formed in the motor shell (11), and a protrusion (26) formed in the head shell (21), or vice versa, said recess (16) and said protrusion (26) being configured and arranged so that the protrusion (26) fits in the recess (16) when the motor shell (11) and the head shell (21) are in said relative angular and axial coupling position.

3. The hand-held mixer according to claim 2, **characterised in that** said protrusion (26) formed in the head shell (21) or in the motor shell (11) contacts with a contact surface (17) of the motor shell (11) or of the head shell (21), respectively, when said motor shell (11) and the head shell (21) are in a range of relative angular and axial semi-coupling positions, wherein the first and second magnetic coupling elements (15, 25) are misaligned and axially separated.

4. The hand-held mixer according to claim 2 or 3, **characterised in that** said recess (16) comprises a recess ramp (16a) at a circumferential end thereof and said protrusion (26) comprises a protrusion ramp (26a) at a corresponding circumferential end thereof, whereby said recess and protrusion ramps (16a, 26a) slide with respect to one another for separating the motor shel (11) and the head shell (21) when both are rotated in respective opposite decoupling directions from said relative angular and axial coupling position.

5. The hand-held mixer according to claim 4, **characterised in that** said recess (16) comprises a recess step (16b) at another circumferential end thereof opposite said recess ramp (16a) and said protrusion (26) comprises a protrusion step (26b) at another circumferential end thereof opposite said protrusion ramp (26a), whereby said recess and protrusion steps (16b, 26b) abut one another for preventing the rotations of the motor shell (11) and the head shell (21) in respective opposite directions contrary to said opposite decoupling directions from the relative angular and axial coupling position.

6. The hand-held mixer according to claim 5, **characterised in that** said circumferential ends opposite the recesses and protrusions (16, 26) wherein the recess and protrusion ramps (16a, 26a) and the recess and protrusion steps (16b, 26b) are found, are in positions selected according to the rotation direction of the drive shaft (12) to prevent the latter from rotating the working head (20) with respect to the motor assembly (10) when the recess (16) and the protrusion (26) are mutually coupled.

7. The hand-held mixer according to any one of the preceding claims, **characterised in that** the motor she) (11) comprises a guide housing (31) through which the shaft coupling member (14) is arranged and the head shell (21) comprises a surrounding wall (30) surrounding the transmission shaft (22), wherein said surrounding wall (30) fits such that it can rotate in said guide housing (31) when the motor shell (11) and the head shell (21) are in relative angular and axial coupling or semi-coupling positions .

8. The hand-held mixer according to one of claims 2 to 4, **characterised in that** the first magnetic coupling element (15) is arranged in the recess (16) and has a surface flush with a bottom surface (16c) of the recess (16), and the second magnetic coupling element (25) is arranged in the protrusion (26) and has a surface flush with a top surface (26c) of the protrusion (16).

9. The hand-held mixer according to claim 2 to 4, **characterised in that** the first magnetic coupling element (15) is arranged in said contact surface (17) of the motor shell (11) and the second magnetic coupling element (25) is arranged in an interface surface (27) of the head shell (21).

10. The hand-held mixer according to any one of the preceding claims 2 to 9, **characterised in that** it comprises a number of recesses (16) distributed at regular angular intervals around the drive shaft (12) and an equal or lower number of corresponding protrusions (26) distributed at regular angular intervals around the transmission shaft (22) in the head shell (21), or vice versa.

## Patentansprüche

1. Handmixer mit abnehmbaren Arbeitskopf, umfassend:
eine Motoranordnung (10), umfassend ein Motorgehäuse (11), in welchem ein Motor (13) gelagert ist, welcher zum Drehen einer Antriebswelle (12) operativ angeschlossen ist;
einen Arbeitskopf (20), umfassend ein Kopfgehäuse (21), in welchem eine Übertragungswelle (22) installiert ist, welche zum Antreiben eines Mechanismus oder eines Werkzeugs operativ angeschlossen ist;
Gehäusekopplungsmittel zum Koppeln des genannten Kopfgehäuses (21) mit dem genannten Motorgehäuse (11) auf eine lösbare Weise; und
erste und zweite Wellenkopplungselemente (14, 24), welche jeweils an der genannten Antriebswelle (12) und an der genannten Übertragungswelle (22) befestigt sind, zum koaxialen Koppeln der genannten Antriebswelle (12) mit der genannten Übertragungswelle (22) auf eine lösbare Weise, wenn das Motorgehäuse (11) und das Kopfgehäuse (21) miteinander gekoppelt sind,
**dadurch gekennzeichnet, dass** die genannten Gehäusekopplungsmittel Folgendes umfassen:
erste und zweite magnetische Kopplungselemente (15, 25), welche jeweils an dem Motorgehäuse (11) und an dem Kopfgehäuse (21) stationär befestigt sind,
in außermittigen Positionen in Bezug auf die Antriebswelle (12) und die Übertragungswelle (22); und
Positionierungsmittel, welche es ermöglichen, das Motorgehäuse (11) und das Kopfgehäuse (21) in eine relative winkelige und axiale Kopplungsposition zu setzen, wobei die genannten ersten und zweiten magnetischen Kopplungselemente (15, 25) ausgerichtet und nah genug zueinander sind, um eine magnetische Anziehungskraft auszuüben, welche das Motorgehäuse (11) und das Kopfgehäuse (21) miteinander gekoppelt halten kann.

2. Handmixer nach Anspruch 1, **dadurch gekennzeichnet, dass** die genannten Positionierungsmittel eine Aussparung (16), welche in dem Motorgehäuse (11) gebildet ist, und einen Vorsprung (26), welcher in dem Kopfgehäuse (21) gebildet ist, umfassen, oder umgekehrt, wobei die genannte Aussparung (16) und der genannte Vorsprung (26) so ausgebildet und angeordnet sind, dass der Vorsprung (26) in der Aussparung (16) passt, wenn sich das Motorgehäuse (11) und das Kopfgehäuse (21) in der genannten relativen winkeligen und axialen Kopplungsposition befinden.

3. Handmixer nach Anspruch 2, **dadurch gekennzeichnet, dass** der genannte Vorsprung (26), welcher in dem Kopfgehäuse (21) oder in dem Motorgehäuse (11) gebildet ist, jeweils mit einer Kontaktfläche (17) des Motorgehäuses (11) oder des Kopfgehäuses (21) in Kontakt kommt, wenn sich das genannte Motorgehäuse (11) und das Kopfgehäuse (21) in einem Bereich von relativen winkeligen und axialen Halbkopplungspositionen befinden, in welchen die ersten und zweiten magnetischen Kopplungselemente (15, 25) verstellt und axial getrennt sind.

4. Handmixer nach Anspruch 2 oder 3, **dadurch gekennzeichnet, dass** die genannte Aussparung (16) eine Aussparungsabschrägung (16a) an einem Umfangsende derselben umfasst und der genannte Vorsprung (26) eine Vorsprungsabschrägung (26a) an einem entsprechenden Umfangsende desselben umfasst, wobei die genannten Aussparungsabschrägungen (16a) und die genannten Vorsprungsabschrägungen (26a) zueinander gleiten um das Motorgehäuse (11) und das Kopfgehäuse (21) zu trennen, wenn beide in jeweiligen entgegengesetzten Entkopplungsrichtungen in Bezug auf die genannte relative winkelige und axiale Kopplungsposition gedreht werden.

5. Handmixer nach Anspruch 4, **dadurch gekennzeichnet, dass** die genannte Aussparung (16) eine Aussparungsstufe (16b) an einem anderen Umfangsende derselben entgegengesetzt zur genannten Aussparungsabschrägung (16a) umfasst und der genannte Vorsprung (26) eine Vorsprungsstufe (26b) an einem anderen Umfangsende desselben entgegengesetzt zur genannten Vorsprungsabschrägung (26a) umfasst, wobei die genannten Aussparungsstufen (16b) und die genannten Vorsprungsstufen (26b) aneinanderstoßen, um die Drehungen des Motorgehäuses (11) und des Kopfgehäuses (21) in jeweiligen entgegengesetzten Richtungen, die zu den genannten entgegengesetzten Entkopplungsrichtungen in Bezug auf die relative winkelige und axiale Kopplungsposition entgegengesetzt sind, zu verhindern.

6. Handmixer nach Anspruch 5, **dadurch gekennzeichnet, dass** sich die genannten Umfangsenden, die zu den Aussparungen (16) und Vorsprüngen (26) entgegengesetzt sind, wo sich die Aussparungsabschrägungen (16a) und die Vorsprungsabschrägungen (26a) und die Aussparungsstufen (16b) und die Vorsprungsstufen (26b) befinden, in ausgewählten Positionen gemäß der Drehrichtung der Antriebswelle (12) befinden, um zu verhindern, dass diese den Arbeitskopf (20) in Bezug auf die Motoranordnung (10) dreht, wenn die Aussparung (16) und der Vorsprung (26) miteinander gekoppelt sind.

7. Handmixer nach einem der vorhergehenden Ansprüche, **dadurch gekennzeichnet, dass** das Motorgehäuse (11) eine Führungsaufnahme (31), durch welche das Wellenkopplungselement (14) angeordnet ist, umfasst, und das Kopfgehäuse (21) eine umgebende Wand (30), welche die Übertragungswelle (22) umgibt, umfasst, wobei die genannte umgebende Wand (30) so passt, dass sie sich in der genannten Führungsaufnahme (31) drehen kann, wenn sich das Motorgehäuse (11) und das Kopfgehäuse (21) in relativen winkeligen und axialen Kopplungs- oder Halbkopplungspositionen befinden.

8. Handmixer nach einem der Ansprüche 2 bis 4, **dadurch gekennzeichnet, dass** das erste magnetische Kopplungselement (15) in der Aussparung (16) angeordnet ist und eine Fläche aufweist, welche mit einer unteren Fläche (16c) der Aussparung (16) bündig ist, und das zweite magnetische Kopplungselement (25) in dem Vorsprung (26) angeordnet ist und eine Fläche aufweist, welche mit einer oberen Fläche (26c) der Aussparung (16) bündig ist.

9. Handmixer nach Anspruch 2 bis 4, **dadurch gekennzeichnet, dass** das erste magnetische Kopplungselement (15) in der genannten Kontaktfläche (17) des Motorgehäuses (11) angeordnet ist und das zweite magnetische Kopplungselement (25) in einer Schnittstellenfläche (27) des Kopfgehäuses (21) angeordnet ist.

10. Handmixer nach einem der vorhergehenden Ansprüche 2 bis 9, **dadurch gekennzeichnet, dass** er eine Anzahl von Aussparungen (16), welche in regelmäßigen winkeligen Intervallen um die Antriebswelle (12) verteilt sind, und dieselbe oder eine geringere Anzahl von entsprechenden Vorsprüngen (26), welche in regelmäßigen winkeligen Intervallen um die Übertragungswelle (22) in dem Kopfgehäuse (21), oder umgekehrt, umfasst.

## Revendications

1. Un mélangeur manuel ayant une tête de travail détachable, comportant:
un ensemble de moteur (10) comprenant un carter de moteur (11) dans lequel est logé un moteur (13) relié fonctionnellement pour faire tourner un arbre de commande (12),
une tête de travail (20) comprenant un carter de la tête (21) dans lequel est installé un arbre de transmission (22) relié fonctionnellement pour entraîner un mécanisme ou un outil;
des moyens de couplage de carter pour coupler ce carter de la tête (21) à ce carter du moteur (11) de façon amovible; et
des éléments de couplage d'un premier et deuxième arbre (14,24) fixés à cet arbre de commande (12) et à cet arbre de transmission (22) respectivement pour coupler coaxialement cet arbre de commande (12) à cet arbre de transmission (22) de façon amovible lorsque le carter du moteur (11) et le carter de la tête (21) sont couplés entre eux,
**caractérisé en ce que** ces moyens de couplage de carter comportent:
des premier et deuxième éléments de couplage (15,25) fixés de façon stationnaire sur le carter du moteur (11) et sur le carter de la tête (21), respectivement, dans des positions décentrées par rapport à l'arbre de commande (12) et l'arbre de transmission (22); et
des moyens de positionnement permettant de placer le carter du moteur (11) et le carter de la tête (21) dans une position de couplage relative angulaire et axiale dans laquelle ces premier et deuxième éléments de couplage magnétique (15,25) sont alignés et suffisamment près l'un de l'autre pour exercer une force d'attraction magnétique suffisante capable de retenir le carter du moteur (11) et le carter de la tête (21) mutuellement couplés.

2. Le mélangeur manuel conformément à la revendication 1, **caractérisé en ce que** ces moyens de positionnement comportent un renforcement (16) formé sur le carter du moteur (11) et une saillie (26) formée sur le carter de la tête (21) ou vice versa, ce renfoncement (16) et cette saillie (26) étant configurés et agencés de sorte que la saillie (26) s'adapte à ce renfoncement (16) lorsque le carter du moteur (11) et le carter de la tête (21) se trouvent dans cette position de couplage relative angulaire et axiale.

3. Le mélangeur manuel conformément à la revendication 2, **caractérisé en ce que** cette saillie (26) formée sur le carter de la tête (21) ou sur le carter du moteur (11) est en contact avec une surface de contact (17) du carter du moteur (11) ou du carter de la tête (21), respectivement, lorsque ce carter du moteur (11) et le carter de la tête (21) sont dans une gamme de positions de semi-couplage relatives angulaires et axiales, dans lesquelles les premier et deuxième éléments de couplage magnétique (15, 25) sont mal alignés et écartés axialement.

4. Le mélangeur manuel conformément à la revendication 2 ou 3, **caractérisé en ce que** ce renfoncement (16) comporte une rampe de renfoncement (16a) à une extrémité circonférentielle de celle-ci et cette saillie (26) comporte une rampe de saillie (26a) à une extrémité circonférentielle correspondante de celle-ci, dans lequel ces rampes de renfoncement et de saillie (16a, 26a) glissent l'une par rapport à l'autre pour séparer le carter du moteur (11) et le carter de la tête (21) lorsqu'ils sont tous les deux tournés dans des sens de découplage opposés de la position de couplage relative angulaire et axiale.

5. Le mélangeur manuel conformément à la revendication 4, **caractérisé en ce que** ce renfoncement (16) comporte un gradin de renfoncement (16b) à une autre de ses extrémités circonférentielles opposé à cette rampe de renfoncement (16a) et cette saillie (26) comporte un gradin de saillie (26b) à une autre de ses extrémités circonférentielles opposée à cette rampe de saillie (26a) dans lequel ses gradins de renfoncement et de saillie (16b, 26b) sont bout à bout entre eux pour empêcher les rotations du carter du moteur (11) et du carter de la tête (21) dans des sens opposés respectifs contraires à ces sens de découplage opposés de la position de couplage angulaire et axiale.

6. Le mélangeur manuel conformément à la revendication 5, **caractérisé en ce que** ces extrémités circonférentielles en face des renfoncements et des saillies (16, 26) dans lesquels se trouvent les rampes de renfoncement et de saillie (16a,26a) et les gradins de renfoncement et de saillie (16b, 26b) sont dans des positions sélectionnées conformément au sens de rotation de l'arbre de commande (12) pour éviter que celui-ci fasse tourner la tête de travail (20) par rapport à l'ensemble du moteur (10) lorsque le renfoncement (16) et la saillie (26) sont couplés mutuellement.

7. Le mélangeur manuel conformément à une quelconque des revendications précédentes **caractérisé en ce que** le carter du moteur (11) comporte un boîtier de guidage (31) à travers lequel est agencé l'élément de couplage de l'arbre (14) et le carter de la tête (21) comporte une paroi enveloppante (30) qui entoure l'arbre de transmission (22), dans lequel cette paroi enveloppante (30) est adaptée de façon à ce qu'il puisse tourner dans ce boîtier de guidage (31) lorsque le carter du moteur (11) et le carter de la tête (21) sont dans des positions de couplage ou de semi-couplage relatives, angulaires et axiales.

8. Le mélangeur manuel conformément à une des revendications 2 à 4, **caractérisé en ce que** le premier élément de couplage magnétique (15) est agencé dans le renfoncement (16) et possède une surface au ras d'une surface de base (16c) du renfoncement (16) et le deuxième élément de couplage magnétique (25) est agencé dans la saillie (26) et possède une surface au ras de la surface supérieur (26c) de la saillie (16).

9. Le mélangeur manuel conformément aux revendications 2 à 4, **caractérisé en ce que** le premier élément de couplage magnétique (15) est agencé sur cette surface de contact (17) du carter du moteur (11) et le deuxième élément de couplage magnétique (25) est agencé sur une surface d'interface (27) du carter de la tête (21).

10. Le mélangeur manuel conformément à une quelconque des revendications 2 à 9, **caractérisé en ce qu'**il comporte un certain nombre de renfoncements (16) distribués à des intervalles angulaires réguliers autour de l'arbre de commande (12) et un nombre égal ou inférieur de saillies correspondantes (26) distribuées à des intervalles angulaires réguliers autour de l'arbre de transmission (22) sur le carter de la tête (21) ou vice versa.
